# EUROPEAN PATENT SPECIFICATION

(11) **EP 0 649 936 B1**
(45) Date of publication and mention of the grant of the patent: **13.08.1997**
(21) Application number: 94307729.7
(22) Date of filing: 20.10.1994
(51) Int. Cl.: D06N 3/04, D06N 3/00, B60R 21/16

(54) **Fabric treated with polymer dispersion to reduce porosity**
Mit Polymerisatdispersion behandelte Gewebe zur Reduzierung der Porosität
Tissu traité par une dispersion de polymère pour réduire la porosité

(30) Priority: 21.10.1993 US 139798
(43) Date of publication of application: 26.04.1995
(73) Proprietor: MILLIKEN RESEARCH CORPORATION, Spartanburg South Carolina 29304 (US)
(72) Inventor: Parker, Richard Henry, LaGrange, GA 30240, (County of Troup) (US)
(74) Representative: Ouzman, Beverley Nicola Claire

(56) References cited:
- WO-A-90/11914
- DE-B- 1 069 112
- DE-C- 976 286
- US-A- 3 705 645
- US-A- 3 708 332
- US-A- 4 292 105
- US-A- 5 284 677

## Description

This invention relates to a fabric useful for manufacturing automotive air bags, and in particular to a fabric having reduced air permeability as a result of application of an aqueous polyolefin dispersion to the fabric.

### BACKGROUND OF THE INVENTION

Air bags for motor vehicles are installed on the drivers side and, increasingly, on the passenger side of motor vehicles. It is their purpose to rapidly inflate in case of the collision of the vehicle with another object and to protect driver and passenger from serious injury.

Air bag fabrics have to satisfy a number of very stringent specifications that are not easily met. The fabrics must have low air permeability, so that upon instantaneous inflation they retain air pressure for sufficient time to protect the occupant of a vehicle. The fabrics should be as lightweight and flexible as possible so that the resulting air bags can be folded into a compact configuration for installation in the motor vehicle. They must not be adversely affected by long-term folded, compressed storage under conditions of heat and humidity as can be encountered by automobiles parked in the sun.

For example, they must not become tacky, since tacky fabric surfaces would glue together the folded layers or cause the fabric surface to adhere to the air bag container thereby inhibiting the rapid and timely deployment of the air bag. It is important that the fabric retain its air impermeability over its useful life.

Additionally, air bag fabrics should not undergo fiber weakening reactions by themselves or with chemicals associated with the fabric, as, for example, with chemicals constituting part of a fabric coating. To prevent their rupture during explosive inflation they must retain substantially all of their tensile strength. They should not, in the presence of heat and moisture, release undesirable or noxious gases. They must meet flammability and burn rate specifications. For purposes of ease and economy of manufacture they should be easily cut in manufacturing without fraying. Both the fabric and air bags made therefrom should be inexpensive.

Today, air bags are generally manufactured from woven nylon and polyester filament fabrics. In order to meet the specifications for low air permeability, fabrics are generally either woven tightly and then thermally shrunken and calendared to achieve the specified air impermeability, or the fabrics are coated with one of a variety of polymeric film forming materials, such as neoprene, urethane or acrylic polymers. For example, Menzel et al., U.S. Patent No. 5,110,666 disclose fabric coated with novel polycarbonate-polyether-polyurethane polymers. Alternatively, fabrics laminated to air impermeable polymeric films are used.

Many of the aforementioned fabrics have drawbacks associated with them. For example, densely constructed non-coated fabrics can cause problems in the manufacturing process of air bags because of the well known propensity of filament fabrics to fray when cut, whether die cut or knife cut. Also, special provisions need to be made in the design and manufacture of air bags fabricated from non-coated filament fabrics because of the propensity of non-coated filament fabrics to exhibit unacceptable seam slippage.

Some coated fabrics, on the other hand, while avoiding the problems of fraying and seam slippage, exhibit other drawbacks. The coating may result in very extensive fiber-to-fiber and yarn-to-yarn bonding at or near the coated fabric surface and will thus inhibit the fiber-to-fiber and yarn-to-yarn mobility and further greatly increase the stiffness of the fabric, even if the intrinsic stiffness of the polymeric film itself is low, which is not always the case. Additionally, coatings which tend to lock the yarns in place have been found to have an adverse affect on the tear strength of the fabric.

Neoprene rubber, urethanes and acrylics can, under conditions of heat, humidity, or the presence of oxygen deteriorate over time and form tacky materials that will glue the fabric layers together and cause them to adhere to the walls of the air bag container and thus interfere with the deployment of the air bag. The deterioration may also result in some loss of air impermeability. Decomposition and hydrolysis products can also potentially adversely affect the strength of the fibers with which they are in contact by chemically attacking them.

Some materials, for example acrylics with a low Tg, are inherently tacky. While this tackiness can be controlled by cross-linking them with appropriate resin forming chemicals, such as formaldehyde or di-hydroxy-di-methylolethylene urea, cross-linking will greatly increase their stiffness. Another method to counteract the problem of tacky fabric surfaces is disclosed in Konen, U.S. Patent No. 3,705,645. Konen discloses a fabric made impervious to fluids by coating one face of the fabric with an aqueous dispersion of an acrylic polymer. The coating is covered with a fibrous material, such as tissue paper, to prevent adhesion of adjacent portions of the coated fabric surface. This, while solving the layer-to-layer and the air bag to container wall adhesion problem, will, of course, result in a bulky fabric that is more difficult to fold into a compact configuration.

The polymeric materials are, in some cases, applied by coating the fabric with thickened aqueous dispersions of the polymer, such as by knife coating. To avoid the inevitable uncoated spots with their attendant higher air permeability, fairly heavy coatings are often used. This increases the weight and the thickness of the air bag fabric and adversely effects the drape and ease of folding and, therefore, interferes with the ability to package the air bag into a compact, space saving configuration. While thin coatings may be employed, from the processing point of view, such coatings are expensive to apply, requiring supervision by qualified operators.

Solvent coatings share many of the disadvantages of aqueous coatings and have the additional drawback of increased cost, much of it incurred because of the need to recover the used solvent for environmental and cost reasons. Another drawback of solvent based coatings is the potential health hazards associated with solvent processing.

Occasionally polymeric films have been laminated to aforementioned fabrics to render them air impermeable. Laminating a preformed polymeric film to a fabric is relatively expensive, and labor intensive and requires close supervision by qualified operators. With laminates there exists a considerable risk of delamination with time and under shear resulting in the increased possibility of film rupture and air impermeability loss at the moment of explosive inflation. To protect against delamination, it is often desirable to apply a treatment for increasing the adhesive force between the film and the fabric. For example in EP 0 496 894 A, assigned to Asahi Kasei Kogyo Kabushiki Kaisha, the fabric surface is oxidized with a corona discharge treatment and/or an anchor coating adhesive may be applied. Molten resin is then extruded on to the fabric. Next, a non-woven fabric is preferably overlaid on the resin film to prevent adhesion when the laminate is folded.

Both polyester and nylon filaments as well as other synthetic fibers achieve some of their flame retardant characteristics by melting and shrinking back due to the heat emitted by an approaching flame. By maintaining a distance from the flame, the fibers remain below their ignition temperature and therefore, do not propagate burning. Most coatings will prevent the shrinking back of the filaments because of their high melting points, their high melt viscosity and, particularly, because of their propensity to form a shape retaining char of a mechanical integrity sufficient to prevent the filaments from shrinking back, thus defeating their major intrinsic mechanism of flammability retardation. Frequently, use of additional flame retardant chemicals with their own disadvantages and cost becomes necessary to compensate for the loss of the inherent flammability retarding characteristics of the fibers.

It is known in the art to improve the hand and increase the lubricity of the textile fabrics by application of a small amount of a polyolefin emulsion or dispersion to a fabric. Typical applications are in the range of 0.5 to 1.0 wt.% polyolefin added on to the weight of the fabric. However, these levels are not sufficient to significantly alter the air permeability of the fabric.

### SUMMARY OF THE INVENTION

Therefore, one object of the invention is to provide a fabric having low air permeability suitable for use in air bags.

Another object is to provide a fabric which is coated to reduce its porosity.

Another object is to provide a coated fabric which retains its flexibility and tear strength, and may be compactly folded.

Still another object is to provide a coating process which does not require adhesive treatments to bond the coating and the fabric.

Yet another object of the invention is to provide a coated fabric which is not tacky and does not require that the coating be overlaid with a fibrous material, non-woven fabric or talc to prevent adhesion of adjacent coated folds of fabric.

A further object of the invention is to provide a coated fabric which meets Federal Motor Vehicle Safety Standard 302 for flammability.

Accordingly, a coated air bag fabric is manufactured by the process having the steps of providing a woven synthetic thermoplastic (for example nylon or polyester) textile fabric having a weight of from 136-339 g/m² (4 to 10 oz/yd²), applying an aqueous dispersion of a polyolefin resin to said fabric to achieve from 3 to 30 wt.% polyolefin per dry weight of the fabric and drying the fabric to remove water, thereby forming a polyolefin film on the fabric. The coated fabric has a maximum air permeability of 91.44 cm³/cm² per minute (3 cfm/ft²), preferably a maximum of 30.48 cm³/cm² per minute (1 cfm/ft²) at 1.27cm (0.5 inches) of water and a burn rate according to USA Federal Motor Vehicle Safety Standard No. 302 of 7.62cm (3 inches) per minute or less.

In a further embodiment, the fabric of the present invention is made into an air bag, as is well known to those skilled in the art. The present fabric may constitute the entire air bag or may be incorporated into portions of air bag, where a fabric having the characteristics of the present fabric is desired. Preferably, the present fabric constitutes at least 25% of the yardage in the air bag.

In addition to meeting the aforementioned objectives and avoiding the disadvantages of earlier fabrics, the fabric of the present invention features a coating applied to both sides of the fabric, which essentially forms a film on the yarns of the fabric.

### BRIEF DESCRIPTIONS OF THE DRAWINGS

Figure 1 is a cross section of a 49 X 49 plain weave, 420 denier, multifilament, nylon fabric treated as described in Example 1 at a magnification of 60X.

Figure 2 is a top view of the aforementioned fabric at a magnification of 60X.

Figure 3 is a top view of the aforementioned fabric at a magnification of 500X.

### DESCRIPTION OF THE PREFERRED EMBODIMENT OF THE INVENTION

Without limiting the scope of the invention, the preferred features of the invention are hereinafter set forth.

The fabric used in the present invention is woven from yarns made of synthetic thermoplastic resins, preferably polyester or polyamide yarns, such as nylon and aramide yarns. The yarns may range from 200 to 1200 denier, preferably 300 to 900 denier, and more preferably 300 to 700 denier. Typically, continuous, multifilament yarns are employed. The fabric weight may range from 136-339 g/m² (4 to 10 oz/yd²), with 170-288 g/m² (5 to 8.5 oz/yd²) being preferred. By way of example, the fabric may be a plain, twill, satin or basket weave, or derivative thereof. Constructions ranging from 20 to 80 ends per 2.54cm (1 inch) and 20 to 80 picks per 2.54 cm (1 inch) are generally employed. Preferably the fabric is a plain weave construction.

The fabric is coated by application of an aqueous dispersion of a polyolefin resin. The polyolefin may be selected from polymers of ethylene, propylene and butylene, including random and blocked copolymers and terpolymers. Minor amounts of other olefinic monomers may be incorporated into the polymer, for example, up to 10 wt.% of C₅-C₁₂ olefins. In one embodiment, ethylene or propylene, or both are co-polymerized with from 2 to 10 wt.% of a C₆ to C₁₀ alpha-olefin, preferably about 4 to 8 wt.% of a C₆ - C₈ alpha-olefin. Also within the scope of the present invention are polyolefins which have been modified to, for example, improve their dispersability, such as polyolefins having acrylic groups grafted thereon, typically from 2 to 10 wt.% grafted material.

Preferred polyolefins include linear low density polyethylene, high density polyethylene, polypropylene, and random copolymers of polypropylene and polyethylene. Tackiness or blocking of the coated fabric may be avoided by employing a polyolefin resin having a softening point greater than 110° C. Additionally, fabric considered for use in air bags must undergo a multitude of performance tests including accelerated heat aging studies. Consequently, it is desirable to provide a polyolefin resin coating which has a softening point of 120° C or greater.

For automotive air bag applications, the fabric should desirably also meet USA Federal Motor Vehicle Safety Standard (FMVSS) No. 302 for flammability. The test method is described in detail in *Textile Flammability...a Handbook of Regulations, Standards and Test Methods,* published by the American Association of Textile Chemists and Colorists. Briefly, the test involves placing the fabric in a horizontal position, applying a flame source at one end for a measured time, and measuring the rate at which the flame is propagated along the length of fabric. To pass the test, the burn rate must be 7.62cm (3.0 inches) per minute or less or be self extinguishing (SE).

It is believed that fabrics made of polyester and polyamide filaments achieve some of their flame retardant characteristics by melting or shrinking back from the flame source thereby avoiding ignition. Coatings which are inherently flammable, thermosetting or prevent the fabric from shrinking back because of their high melting points, high melt viscosities or propensity to form a shape retaining char, are undesirable. Accordingly, polyolefin resins having a softening point of 160° C or less, preferably 150° C or less are preferred. The aqueous polyolefin dispersion may contain from 15 to 70 wt.% of the polyolefin resin, preferably 20 to 50 wt.%, more preferably 30 to 40 wt.%.

The aqueous polyolefin dispersion is preferably in the form of a stable emulsion. The term emulsion is used herein to include solid in liquid dispersions, since polyolefin dispersions are typically formed by pressure emulsification techniques, such as those carried out at temperatures above the softening point of the polyolefin. However, it is not intended that the invention be limited to any particular method of forming the emulsion.

Preferably, the mean particle size of the polyolefin phase is 3µm (microns) or less, more preferably, 1µm (micron) or less, and most preferably from 0.01 to 0.1µm (microns). It is believed that the smaller particle size not only enhances the stability of the emulsion, but it allows the polyolefin particles to penetrate into the yarn bundles, which could act like a sieve for larger particles. Additionally, the smaller particles may easily coalesce into a coherent film as the treated fabric is dried.

In addition to the polyolefin resin, the dispersion may contain additives such as emulsifiers, surfactants, antimicrobials and pH modifiers. The desired softening point range for the polyolefin resin may be met by blending two or more polyolefin resins. High density polyethylene has been found to be especially useful. The use of compatible, water soluble, non-flammable oils such as some phosphonate esters can also be used as plasticizers to adjust melt viscosity.

The aqueous dispersion may be conveniently applied at ambient temperature, although the dispersion may be heated up to its boiling point without deviating from the scope of the invention. The aqueous dispersion may advantageously be applied at a viscosity of less than 0.3Pa.s (300 centipoises), preferably 0.01-0.20Pa.s (10 to 200 centipoises), most preferably 0.05-0.150Pa.s (50-150 centipoises), measured at the temperatures at which the dispersion is applied to the fabric, generally at 25° C. It is believed that an excessive viscosity reduces penetration of the dispersion into the interstices of the yarn bundles. Without being bound to a particular theory, it is believed that the durability of the polyolefin film and its ability to reduce the air permeability of the fabric is enhanced by partial penetration of the yarn bundle and fiber to fiber bridging within the yarn bundle.

Any of a number of suitable processes may be employed for applying the aqueous polyolefin resin dispersion (liquor) to the fabric. For example, the fabric may be immersed in the liquor, or the liquor may be sprayed on to the fabric. Preferably, the fabric is saturated with the liquor so that both sides of the fabric are treated. Next, any excess liquor is removed by suitable means, for example, by nipping between rollers, vacuum slot suction or centrifuging.

The application of the aqueous polyolefin resin dispersion to the fabric, after removal of any excess liquor, results in a pick up of from 3 to 30 wt.% of the polyolefin resin (dry weight), preferably 5 to 20 wt.% based on the weight of the fabric.

The wet fabric is then dried, forming a film of the polyolefin resin on the fabric. Preferably, the fabric is dried at a temperature at or above the softening temperature of the polyolefin resin to promote coalescence of the resin particles and formation of a coherent film.

Temperatures of 110° C and above may be advantageously employed, although care must be taken to avoid melting the fabric. Temperatures of about 110°C-160° C, preferably about 120°C, are generally used. The drying step may be performed in a tenter oven, as is well known in the art. Following the drying step the fabric can be heat set, which typically is performed at a temperature of about 175° to 190° C. Next, the fabric is cooled to ambient temperature.

The air permeability of the fabric can be measured by measuring the flow of air through a measured area on that fabric when it is exposed to a defined pressure differential between its faces. One method for this measurement is described in USA Federal Test Method Standard No. 191A, Method 5450. Briefly, the test involves securing a sample of fabric over an orifice of known area and drawing air through the sample by means of a suction fan. The test pressure is regulated by the operator, who adjusts a valve until the desired pressure differential is reached. The flow of air through the fabric is then read from a calibrated manometer (flow meter).

The polyolefin coating produced by the above described process reduces the air permeability of the fabric to less than 91.44 cm³/cm² per minute (3 cfm/ft²) at 1.27cm (0.5 inches) of water, preferably 30.48 cm³/cm² per minute (1 cfm/ft²) or less at 1.27cm (0.5 inches) of water.

The coated fabric has a flammability rating according to USA FMVSS No. 302 of 7.62cm (3 inches) per minute or better. The flammability of the fabric may be minimized when the wt.% pickup of the polyolefin is 20% or less based on the dry weight of the fabric.

In addition to meeting the air permeability and flammability requirements for air bag applications, fabrics must meet a number of standards-related mechanical properties. An example of such a set of standards is provided in Table 1 below.

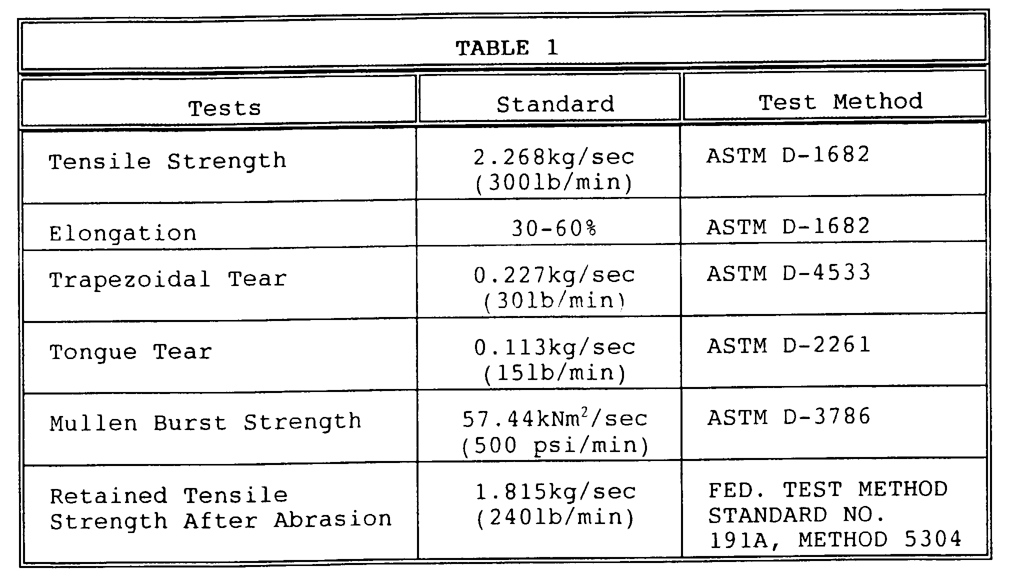

Further, the coated fabric must meet a variety of heat aging tests, depending upon the producer of the air bag module. These tests may involve exposure to heat as great as 120° C for as long as 400 hours. This testing may also involve cyclical exposure of the coated fabric to the heat described above and to temperatures as low as -40° C, with atmospheres composed of relative humidities from ambient to 95%. Most of these products require retention of at least 80% of the original tensile properties after exposure to these conditions.

The invention may be further understood by reference to the following examples, but the invention is not to be construed as being unduly limited thereby. Unless otherwise indicated, all parts and percentages are by weight.

### EXAMPLE 1

A plain weave (49 ends/2.54cm (1 inch) X 49 picks/2.54cm (1 inch) fabric constructed from 420 denier, multifilament, nylon yarn was desized and scoured by standard techniques.

A high density polyethylene polymer that had been catalytically oxidized with air to improve its dispersability, (average molecular weight 8000, mp 138-140° C), was emulsified with a nonionic surfactant to yield a dispersion that contained 40% non-volatiles with a pH of 9.5, a measured viscosity of 0.10Pa.s (100 centipoises) at 25° C, and an average particle size from 0.02 - 0.05µm (microns). This polymer emulsion was diluted with water to yield a dispersion containing 35% non-volatiles.

The fabric was immersed in this dilution and allowed to become saturated. It was then removed from the dispersion and excess liquid was eliminated by squeezing the fabric between a pair of rollers. The liquor remaining on the fabric represents a 24 wt.% total liquor pick up, or an 8% polyolefin resin pick up based upon the weight of fabric.

Next, the fabric is placed in a tenter oven and dried at 121°C (250°F) for 0.3 minutes, followed by drying at 177-190°C (350 to 375°F) for 1.3 minutes. The dried fabric had a weight of 206.8 g/m² (6.1 oz/yd²).

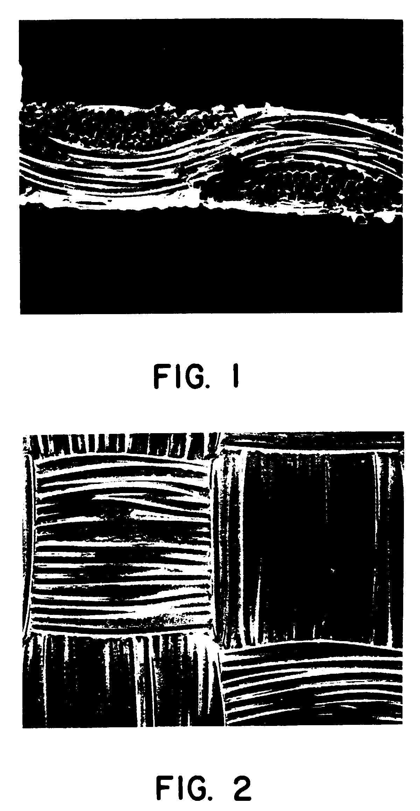

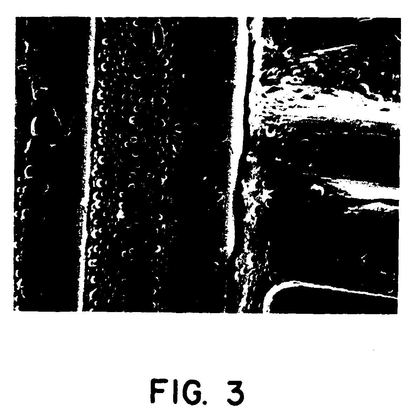

Referring to Figures 1 - 3, the coating appears on both surfaces of the fabric, bridging all of the outermost fibers within a yarn bundle, penetrating, usually, no more deeply than those outermost fibers, and interrupted at most of the interstices between yarn bundles composing the warp and fill of the fabric. This film may show some sporadic cracking that does not compromise the measured properties of the product.

The fabric was tested and found to have the following properties using the test methods set forth herein.

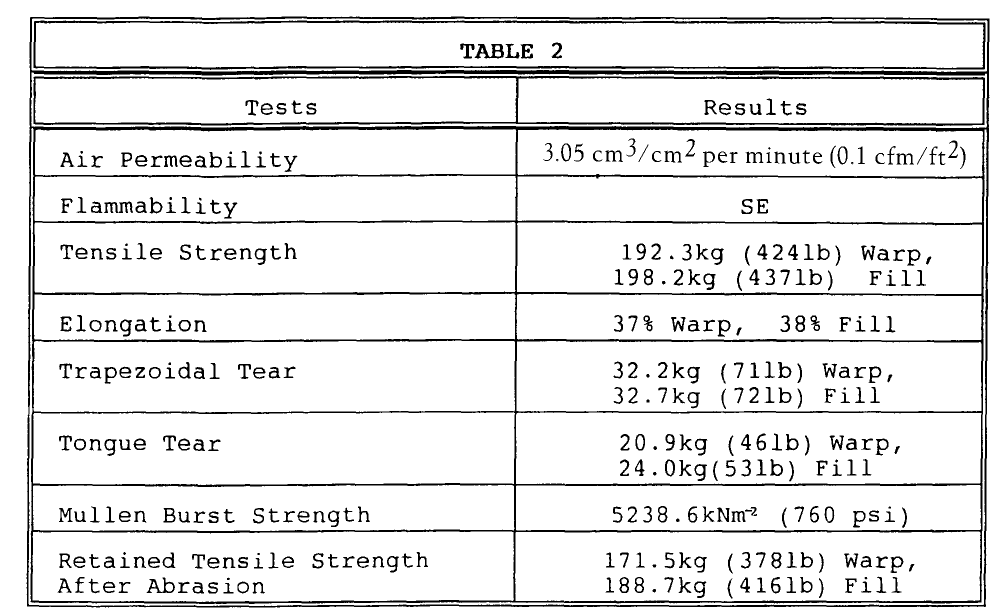

Additionally, the flexibility of the fabric was evaluated and found to be superior to traditional coated fabric, such as neoprene coated fabric.

The fabric was then heat aged for 400 hours at 107° C and tested for the following properties summarized below in Table 3.

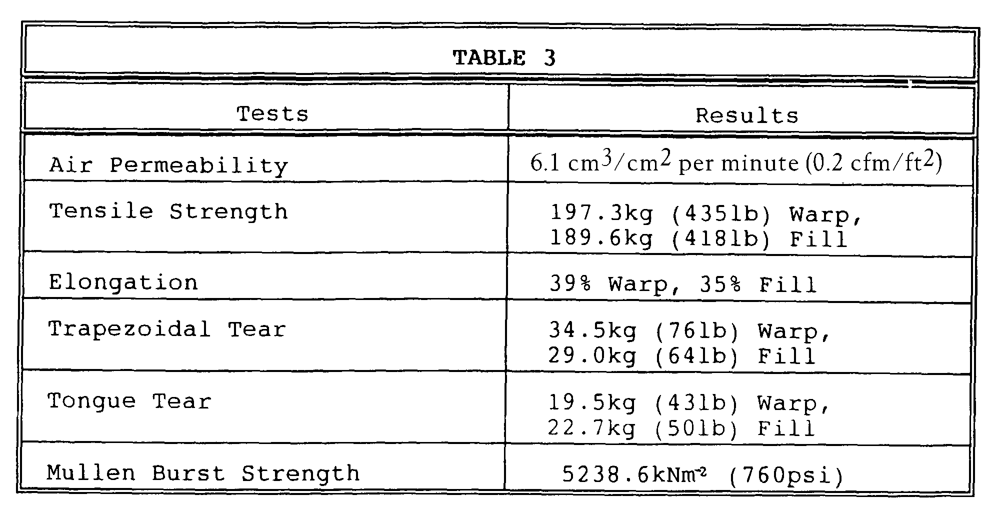

### EXAMPLE 2

The polyolefin dispersion described in Example 1 was modified by adding a water soluble cyclic phosphonate ester in an amount equivalent to 15 percent (weight) of the total non-volatiles. A 650 denier, plain weave polyester fabric (41 X 37) was immersed, squeezed and dried in the same manner as the sample in Example 1. The pick up, by the fabric, of total liquor and non-volatiles alone were 45 wt.% and 16 wt.%, respectively. After drying, the coated fabric had a weight of 274.6 g/m² (8.1 oz/yd²). The fabric was tested and the results are summarized in Table 4.

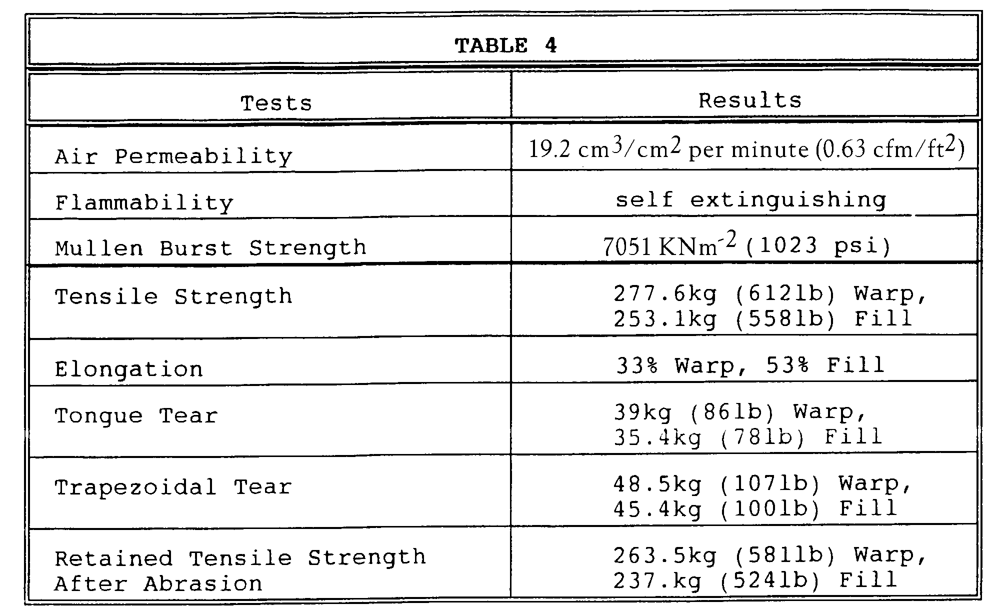

The flexibility of the fabric was found to be superior to traditional coated fabric. After heat aging as described in Example 1, the following results were obtained as reported in Table 5.

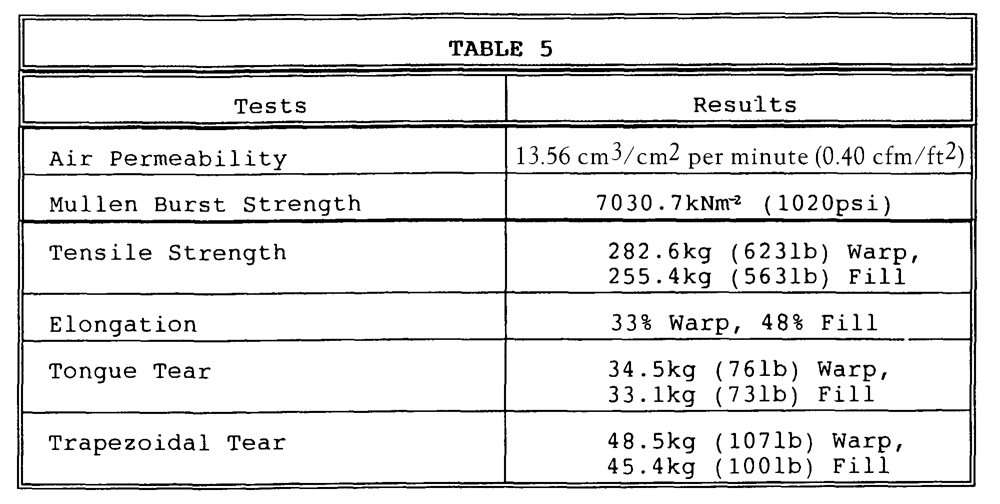

## Claims

1. A product obtainable by the process comprising the steps of:
(a) providing a woven textile fabric having a weight of 136-339 g/m² (4 to 10 oz/yd²);
(b) applying an aqueous dispersion of a polyolefin resin to said fabric to achieve from 3 to 30 wt.% of said polyolefin resin based on the dry weight of said fabric;
(c) drying said fabric to remove water and form a film of said polyolefin resin on said fabric;
whereby said fabric has a maximum air permeability of 91.44 cm³/cm² per minute (3 cfm/ft²) at 1.27cm (0.5 inches) of water.

2. A product as claimed in Claim 1, wherein said aqueous dispersion is an emulsion comprising from 20 to 50 wt % of said polyolefin resin.

3. A product as claimed in either one of Claims 1 and 2 wherein said polyolefin resin has a mean particle size of 3µm (microns) or less.

4. A product as claimed in any one of Claims 1 to 3 wherein said polyolefin resin has a mean particle size of 1µm (micron) or less.

5. A product as claimed in any one of Claims 1 to 4 wherein said aqueous dispersion is applied to said fabric at a viscosity of less than 0.3Pa.s (300 centipoise).

6. A product as claimed in any one of Claims 1 to 5 wherein said polyolefin resin is selected from the group consisting of polyethylene, polypropylene, and random and block copolymers and terpolymers of ethylene, propylene, butylene and up to 10 wt.% of C₅ - C₁₂ olefins.

7. A product as claimed in any one of Claims 1 to 6 wherein said polyolefin resin is selected from the group consisting of polyethylene, polypropylene, and random and block copolymers of ethylene and propylene.

8. A product as claimed in any one of Claims 1 to 7 wherein said fabric is saturated with said aqueous dispersion in said application step.

9. A product as claimed in any one of Claims 1 to 8 wherein said fabric is immersed in said aqueous dispersion in said application step.

10. A product as claimed in any one of Claims 1 to 9 wherein said fabric is constructed from 300 to 900 denier yarns.

11. A product as claimed in any one of Claims 1 to 10 wherein said fabric is selected from polyamide and polyester fabrics.

12. A product as claimed in any one of Claims 1 to 11 whereby said fabric has a maximum air permeability of 30.48 cm³/cm² per minute (1 cfm/ft²) at 1.27cm (0.5 inches) of water, a burn rate according to USA Federal Motor Vehicle Safety Standard No. 302 of 7.62cm (3 inches) per minute or less, a minimum tensile strength of 136.lkg (300lb); elongation of 30 - 60%; minimum trapezoidal tear of 13.6kg (30lb); minimum tongue tear of 6.8kg (15lb); minimum Mullen burst strength of 3446.5kNm⁻² (500psi); and minimum retained tensile strength after abrasion of 108.9kg (240lb).

13. A product as claimed in any one of Claims 1 to 12 wherein said fabric is heated to a temperature above the softening point of said polyolefin resin, but below the melting point of said fabric, after water has been removed in said drying step.

14. A fabric for use as an air bag comprising the product fabric as claimed in any one of claims 1 to 13.

## Patentansprüche

1. Ein Produkt, das durch ein aus den folgenden Schritten bestehendes Verfahren gewonnen werden kann:
(a) Bereitstellen eines Webstoffes mit einem Gewicht von 136-339 g/m² (4 bis 10 oz/yd²);
(b) Auftragen einer wässrigen Lösung eines Polyolefinharzes auf den Stoff, um, basierend auf dem Trockengewicht des Stoffes, zwischen 3 und 30 Gew.% des Polyolefinharzes zu gewinnen;
(c) Trocknen des Stoffes, um Wasser zu entfernen und einen Film aus dem Polyolefinharz auf dem Stoff zu bilden;
wobei der Stoff eine Luftdurchlässigkeit von höchstens 91,44 cm³/cm² pro Minute (3 cfm/ft²) bei 1,27 cm (0,5 Inch) Wasser aufweist.

2. Ein Produkt nach Anspruch 1, wobei die wässrige Lösung eine Emulsion ist, die aus 20 bis 50 Gew.% des Polyolefinharzes besteht.

3. Ein Produkt nach einem der Ansprüche 1 und 2, wobei das Polyolefinharz eine mittlere Teilchengröße von höchstens 3µm (Mikronen) hat.

4. Ein Produkt nach einem der Ansprüche 1 bis 3, wobei das Polyolefinharz eine mittlere Teilchengröße von höchstens 1µm (Mikron) hat.

5. Ein Produkt nach einem der Ansprüche 1 bis 4, wobei die wässrige Lösung mit einer Viskosität von mindestens 0,3Pas (300 Zentipoise) auf den Stoff aufgetragen wird.

6. Ein Produkt nach einem der Ansprüche 1 bis 5, wobei das Polyolefinharz ausgewählt wird aus der Gruppe, bestehend aus Polyethylen, Polypropylen und statistischen Copolymeren und Blockcopolymeren und Terpolymeren aus Ethylen, Propylen, Butylen und aus bis zu 10 Gew.% C₅-C₁₂ Olefinen.

7. Ein Produkt nach einem der Ansprüche 1 bis 6, wobei das Polyolefinharz ausgewählt wird aus einer Gruppe, bestehend aus Polyethylen, Polypropylen und statistischen Copolymeren und Blockcopolymeren aus Ethylen und Propylen.

8. Ein Produkt nach einem der Ansprüche 1 bis 7, wobei der Stoff während des Auftragungsschritts mit der wässrigen Lösung angereichert wird.

9. Ein Produkt nach einem der Ansprüche 1 bis 8, wobei der Stoff während des Auftragungsschritts in die wässrige Lösung eingetaucht wird.

10. Ein Produkt nach einem der Ansprüche 1 bis 9, wobei der Stoff aus Garnen mit 300 bis 900 Denier hergestellt wird.

11. Ein Produkt nach einem der Ansprüche 1 bis 10, wobei der Stoff aus Polyamid- und Polyesterstoffen ausgewählt wird.

12. Ein Produkt nach einem der Ansprüche 1 bis 11, wobei der Stoff eine Luftdurchlässigkeit von höchstens 30,48 cm³/cm² pro Minute (1 cfm/ft²) bei 1,27 cm (0,5 Inch) Wasser, eine Brenngeschwindigkeit von höchstens 7,62 cm (3 Inch) pro Minute, entsprechend der US Straßen-Verkehrs-Zulassungs-Ordnung Nr. 302, eine Zerreißfestigkeit von mindestens 136,1kg (300lb), eine Dehnung von 30 - 60%, einen Trapezriß von mindestens 13,6kg (30lb), einen Zungenriß von mindestens 6,8kg (15lb), eine Berstfestigkeit von mindestens 3446,5kNm⁻² (500psi), und eine Zerreißfestigkeit nach der Abrasion von mindestens 108,9kg (240lb) aufweist.

13. Ein Produkt nach einem der Ansprüche 1 bis 12, wobei der Stoff, nachdem in dem Trocknungsschritt Wasser entfernt wurde, auf eine Temperatur erhitzt wird, die über dem Erweichungspunkt des Polyolefinharzes aber unter dem Schmelzpunkt des Stoffes liegt.

14. Ein Stoff zur Verwendung für einen Airbag, der aus dem Produktmaterial nach einem der Ansprüche 1 bis 13 besteht.

## Revendications

1. Un produit qu'on peut obtenir par le processus comprenant les étapes de:
a. fournir une étoffe de textile tissé ayant un poids de 136 à 339 g/m² (4 à 10 oz/yd²);
b. appliquer une dispersion aqueuse d'une résine de polyoléfine à ladite étoffe afin d'obtenir de 3 à 30 % en poids de ladite résine de polyoléfine basé sur le poids sec de ladite étoffe;
c. sêcher ladite étoffe afin de retirer l'eau et de former un film de ladite résine de polyoléfine sur ladite étoffe;
par lequel ladite étoffe possède une perméabilité à l'air maximale de 91.44 cm³/cm² par minute (3 cfm/ft²) à 1.27 cm (0.5 pouces) d'eau.

2. Un produit selon la Revendication 1, dans lequel ladite dispersion aqueuse est une émulsion comprenant de 20 à 50% en poids de ladite résine de polyoléfine.

3. Un produit selon l'une des Revendications 1 et 2 dans lequel ladite résine de polyoléfine a une taille particulaire moyenne d'au plus 3 µm (microns).

4. Un produit selon l'une des Revendications 1 à 3 dans lequel ladite résine de polyoléfine a une taille particulaire d'au plus 1 µm (micron).

5. Un produit selon l'une des Revendications 1 à 4 dans lequel ladite dispersion aqueuse est appliquée à ladite étoffe à une viscosité de moins de 0.3 Pa.s (300 centipoises).

6. Un produit selon l'une des Revendications 1 à 5 dans lequel ladite résine de polyoléfine est sélectionnée parmi le groupe consistant de polyéthylène, polypropylène, et de copolymères aléatoires et en masse et de terpolymères d'éthylène, de propylène, de butylène et jusqu'à 10% en poids d'oléfines C₅ -C₁₂.

7. Un produit selon l'une des Revendications 1 à 6 dans lequel ladite résine de polyoléfine est sélectionnée parmi le groupe consistant de polyéthylène, polyprylène, et de copolymères aléatoires et en masse d'éthylène et de propylène.

8. Un produit selon l'une des Revendications 1 à 7 dans lequel ladite étoffe est saturée avec ladite dispersion aqueuse lors de ladite étape d'application.

9. Un produit selon l'une des Revendications 1 à 8 dans lequel ladite étoffe est plongée dans ladite dispersion aqueuse lors de ladite étape d'application.

10. Un produit selon l'une des Revendications 1 à 9 dans lequel ladite étoffe est construite à partir de fils de 300 à 900 deniers.

11. Un produit selon l'une des Rvendications 1 à 10 dans lequel ladite étoffe est sélectionnée parmi des tissus de polyamide et de polyester.

12. Un produit selon l'une des Revendications 1 à 11 dans lequel ladite étoffe a une perméabilité à l'air maximale de 30.48 cm³/cm² par minute (1 cfm/ft²) à 1.27 cm (0.5 pouces) d'eau, une vitesse de combustion selon la norme de sécurité No. 302 de USA Federal Motor Vehicle d'au plus 7.62 cm (3 pouces) par minute, une résistance à la rupture par traction minimale de 136.1 kg (300 lb); un allongement de 30 à 60%; un déchirement trapézoïdal minimal de 13.6 kg (30 lb); un déchirement de languette minimal de 6.8 kg (151 lb); une résistance à l'éclatement Mullen minimale de 3446.5 kNm⁻² (500 psi); et une résistance à la rupture par traction minimale retenue après abrasion de 108.9 kg (240 lb).

13. Un produit selon l'une des Revendications 1 à 12 dans lequel ladite étoffe est chauffée à une température supérieure au point de ramollissement de ladite résine de polyoléfine, mais inférieure au point de fusion de ladite étoffe, après que l'eau ait été retirée lors de l'étape de séchage.

14. Un produit à utiliser en tant qu'air bag comprenant l'étoffe du produit selon l'une des Revendications 1 à 13.
